# EUROPÄISCHE PATENTSCHRIFT

(11) **EP 3 334 949 B1**
(45) Veröffentlichungstag und Bekanntmachung des Hinweises auf die Patenterteilung: **29.09.2021**
(21) Anmeldenummer: 16753891.7
(22) Anmeldetag: 12.08.2016
(51) Int. Cl.: F16D 7/02

(54) **VERBINDUNGSANORDNUNG EINES GETRIEBES IN EINER STRUKTUR**
CONNECTION ASSEMBLY OF A TRANSMISSION IN A STRUCTURE
ENSEMBLE DE LIAISON D'UNE TRANSMISSION DANS UNE STRUCTURE

(30) Priorität: 14.08.2015 DE 102015113488
(43) Veröffentlichungstag der Anmeldung: 20.06.2018
(73) Patentinhaber: Franka Emika GmbH, 80797 München (DE)
(72) Erfinder: ROKAHR, Tim, 81245 München (DE); SCHMID, Johannes, 80538 München (DE); HADDADIN, Sami, 30173 Hannover (DE)
(74) Vertreter: Rösler Rasch van der Heide & Partner
(86) Internationale Anmeldenummer: PCT/EP2016/069266
(87) Internationale Veröffentlichungsnummer: WO 2017/029228

(56) Entgegenhaltungen:
- EP-A1- 2 666 595
- DE-A1-102005 027 290
- DE-T2- 69 609 120
- DE-U1- 20 319 969
- US-A- 4 222 246

## Beschreibung

Die Erfindung betrifft eine Robotergelenkeinheit mit einer eine Verbindungsanordnung zwischen einer antriebseitigen Struktur und einem ein radial innen angeordnetes Getriebe abschließenden Getriebeaußenring. Das Getriebe ist antriebsseitig mit einem Antrieb und abtriebsseitig mit einer Abtriebswelle verbindbar.

Aus der DE 10 2005 027 290 A1 ist eine Verbindungsanordnung gemäß dem Oberbegriff von Anspruch 1 bekannt. Auch die US 4 222 246 zeigt eine Verbindungsanordnung mit einem Ringraum in dem ein Verbindungselement mit elastisch verformbaren Ausbauchungen eingesätzt ist.

Die Aufgabe der Erfindung ist es, eine Robotergelenkeinheit mit einer Verbindungsanordnung zwischen einer antriebseitigen Struktur und einem ein radial innen angeordnetes Getriebe abschließenden Getriebeaußenring anzugeben, die insbesondere eine einfache, schnelle, kostengünstige und zentrierte Montage des Getriebeaußenrings in der Struktur ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Aufgabe ist gelöst durch eine Verbindungsanordnung zwischen einer antriebseitigen Struktur und einem ein radial innen angeordnetes Getriebe abschließenden Getriebeaußenring, wobei zwischen dem Getriebeaußenring und der antriebseitigen Struktur ein Ringraum mit einem darin angeordneten Verbindungselement ausgebildet ist, und axial mindestens einseitig des Ringraumes eine Umfangsführung zwischen Getriebeaußenring und antriebseitiger Struktur ausgebildet ist.

Das Verbindungselement weist erfindungsgemäß über der Umfangserstreckung beabstandete, elastisch verformbare Ausbauchungen auf und bildet unter elastischer Deformation der Ausbauchungen eine kraftschlüssige Verbindung zwischen Getriebeaußenring und antriebseitiger Struktur aus. Vorzugsweise sind die Ausbauchungen gleichmäßig über die Umfangserstreckung des Verbindungselements verteilt.

Das Verbindungselement verteilt radial auftretende Kräfte über die Ausbauchungen weitgehend gleichmäßig über den Umfang des Getriebeaußenrings. Das Verbindungselement kompensiert weiterhin weitestgehend auftretende unterschiedliche wärmebedingte Materialausdehnungen von Getriebeaußenring und antriebsseitiger Struktur. Eine mechanische Überlastung des Getriebes wird durch die kraftschlüssige Verbindung zwischen Getriebeaußenring und antriebseitiger Struktur ausgeschlossen. Hierzu ist das Verbindungselement (Form und Materialeigenschaft) wie auch der Ringraum (Form) geeignet auszuwählen, so dass ab einem vorgegebenen Drehmoment ein Durchrutschen des Getriebeaußenrings in der antriebsseitigen Struktur erfolgt.

Dabei ist beiderseits des Ringraums an der antriebsseitigen Struktur je eine Umfangsführung ausgebildet, die den Getriebeaußenring radial führt. Erfindungsgemäß sind beide Umfangsführungen der Struktur radial zu einer Längsachse der ringförmigen Umfangsführungen unterschiedlich beabstandet, so dass ein Absatz besteht, wobei der Getriebeaußenring komplementär zu den radial beabstandeten Umfangsführungen gestaltet ist, d.h. ebenfalls zwei Umfangsflächen aufweist, die zu einer Längsachse des Getriebeaußenrings radial unterschiedlich beabstandet sind, d.h. dass hier ebenfalls ein Absatz vorliegt. Dies bewirkt eine mindestens zweistufige Führung des Getriebeaußenrings. Dadurch lässt sich das Gewicht der Verbindungsanordnung reduzieren, was vor allem Leichtbau-Vorrichtungen ermöglicht. Vorteilhaft ist im Bereich des Absatzes an der antriebseitigen Struktur ein abgeschrägter Einführungsabschnitt vorhanden. Vorteilhaft ist im Bereich des Absatzes an dem Getriebeaußenring ein abgeschrägter Einführungsabschnitt vorhanden. Durch den abgeschrägten Absatz an dem Getriebeaußenring wird bei einem Einpressen des Getriebeaußenrings in die antriebsseitige Struktur das Verbindungselement nicht verletzt.

Das Getriebe ist vorteilhaft antriebsseitig mit einem Antrieb, bspw. einem Elektromotor, einem Hydraulikmotor etc. und abtriebsseitig bspw. mit einer Abtriebsmechanik verbindbar. Entsprechende Verbindungselemente, erforderliche Lager und mechanische Lösungen zur Integration der Verbindungsanordnung samt Antrieb und Abtrieb bspw. in ein Gehäuse sind je nach Anforderung zu wählen. Das Getriebe ist vorteilhaft ein Wellgetriebe, oder ein Zykloidengetriebe, oder ein Galaxiegetriebe, oder ein Planetengetriebe.

Die kraftschlüssige Verbindung ist für eine je nach Anforderung vorgebbare Haftreibung ausgelegt. Das bedeutet, dass erst bei Überschreiten eines vorgegebenen Drehmoments ein Durchrutschen bzw. eine Drehbewegung des Getriebeaußenrings an der antriebsseitigen Struktur um eine Längsachse des Getriebeaußenrings erfolgt.

Die vorgeschlagene Verbindungsanordnung findet insbesondere vorteilhaft in einem Roboterarm Verwendung, wobei die mechanische Integration der Getriebeeinheit in dem Roboterarm gegenüber dem Stand der Technik erheblich erleichtert wird. Die bisher in der Robotik hierzu verwendeten Verbindungen von Getrieben in Roboterarmen sind Verschraubungen, da die in der Robotik eingesetzten Getriebearten (beispielsweise Wellgetriebe) ausschließlich als verschraubbare Varianten am Markt verfügbar sind. Zum anderen bedingen die verwendeten Getriebearten wegen der hohen Anforderungen an die Maßhaltigkeit äußerst kleine Beeinflussungen durch Radialkräfte. Während ein axiales Verschrauben eines Getriebes nahezu keine Kräfte in radialer Richtung aufbringt verursachen beim Einpressen eines Getriebeaußenrings bereits die kleinsten Toleranzabweichungen in den Bauteilen erhebliche Auswirkungen auf die Paarung der eingesetzten Getriebeteile zueinander. Aus diesem Grund werden Getriebe derzeit nicht eingepresst, sondern verschraubt. Die vorgeschlagene Verbindungsanordnung weist gegenüber den bisher im Stand der Technik benutzten Verbindungen ein geringeres Gewicht auf. Weiterhin ergibt sich mit der vorgeschlagenen Verbindungsanordnung eine kompaktere Bauweise eines Roboterarms, die eine verbesserte Dynamik und Sensitivität des Roboterarms ermöglicht. Hinzu kommt, dass die Skalierbarkeit der vorgeschlagenen Verbindungsanordnung gegenüber dem Stand der Technik verbessert wird, da bei Verkleinerungen der im Stand der Technik verwendeten Verschraubungen bzw. der verwendeten Schrauben, die Stabilität der Verbindung abnimmt. Die vorgeschlagene Verbindungsanordnung ermöglicht weiterhin eine höhere Festigkeit. Da bei der vorgeschlagenen Verbindungsanordnung zudem weniger Teile zur Verbindung/Integration von Getrieben in einen Roboterarm verwendet werden, sinken schließlich die Fehleranfälligkeit und der Verschleiß.

Vorteilhaft weist die antriebsseitige Struktur eine Axialführung des Getriebeaußenrings derart auf, dass eine Bewegung entlang einer Längsachse der Umfangsführungen verhindert wird.

Erfindungsgemäß ist der Ringraum als umfangsseitige Aussparung in der antriebseitigen Struktur ausgebildet.

Das Verbindungselement hat vorteilhaft im nicht montierten Zustand eine Dicke, die größer als die Tiefe des Ringraums ist, so dass das in den Ringraum eingebrachte Verbindungselement den Ringraum radial überragt (bei nicht montiertem Getriebeaußenring). Der entsprechend abgeschrägte Einführungsabschnitt des Getriebeaußenrings (siehe zuvor) erleichtert ein axiales Einführen des Getriebeaußenrings in die Struktur, bei der im Ringraum bereits ein den Ringraum überstehendes Verbindungselement angeordnet ist. Der abgeschrägte Einführungsabschnitt drückt das den Ringraum überstehende Verbindungselement beim axialen Einführen des Getriebeaußenrings kontinuierlich in den Ringraum, so dass kein Verhaken erfolgt.

Erfindungsgemäß ist am Getriebeaußenring ein Absatz für eine Zentrierung eines antriebsseitigen Lagerflansches ausgebildet. Der Absatz dient insbesondere dazu einen antriebsseitigen Lagerflansch zu führen.

Das Verbindungselement weist erfindungsgemäß lastische Eigenschaften auf. Erfindungsgemäß ist das Verbindungselement bandartig als geschlossenes oder offenes Band mit beabstandeten radial sich erstreckenden Ausbauchungen ausgebildet. Vorteilhaft erstrecken sich die Ausbauchungen entlang des Bandes alle radial nach außen, alle radial nach innen oder teilweise nach außen und teilweise nach innen, jeweils bezogen auf einen montierten Zustand des Bandes in dem Ringraum und eine Längsachse des Ringraums.

Vorteilhaft sind die Ausbauchungen gleichverteilt entlang des Bandes oder nur in Teilbereichen des Bandes ausgebildet. Vorteilhaft sind die Ausbuchtungen in Teilbereichen des Bandes angeordnet, die sich im montierten Zustand des Verbindungselements jeweils radial gegenüber liegen. Vorteilhaft erstrecken sich die Ausbauchungen über eine Teilbreite des Verbindungselements. Vorteilhaft sind die Ausbauchungen bogenförmig ausgebildet.

In einer Weiterbildung der Verbindungsanordnung ist das Verbindungselement in Umfangsrichtung wellenartig oder gezackt ausgebildet. Weiterhin vorteilhaft ist das Verbindungselement als ein offener oder geschlossener Ring ausbildet.

Vorteilhaft sind für die Verbindungsanordnung austauschbare Verbindungselemente unterschiedlicher Geometrien und/oder Werkstoffe zur Einstellung unterschiedlicher Durchrutschdrehmomente zwischen Getriebeaußenring und Antriebsgehäuse montierbar. So kann dieselbe Verbindungsanordnung für unterschiedliche Einsatzszenarien konfiguriert werden.

Die Dimensionierung des Getriebeaußenrings bspw. hinsichtlich seiner Dicke, seiner geometrischen Ausführung, seines Materials wird abhängig vom konkreten Einsatzweck und von der Konfiguration der antriebsseitigen Struktur vorteilhaft derart gewählt, dass eine mechanische Deformation des Getriebeaußenrings durch über das Verbindungselement radial wirkende Kräfte ausgeschlossen oder zumindest weitestgehend ausgeschlossen ist.

Ein weiterer Aspekt der Erfindung betrifft einen Roboterarm mit einer oder mehreren Verbindungsordnungen, wie vorstehend beschrieben.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Darstellung eines Ausführungsbeispiels der vorgeschlagenen Verbindungsanordnung im Längsschnitt,
- Fig. 2: eine Detailansicht der Verbindungsanordnung von Fig. 1, und
- Fig. 3: ein Ausführungsbeispiel eines Verbindungselements.

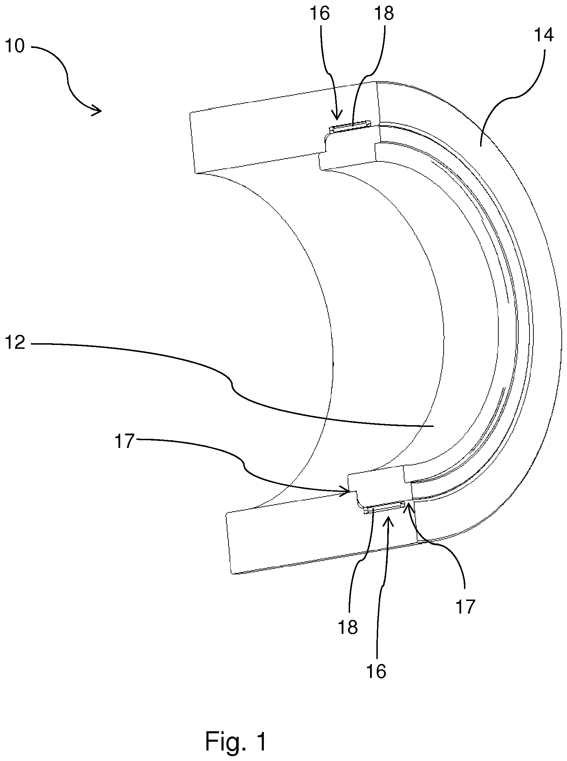

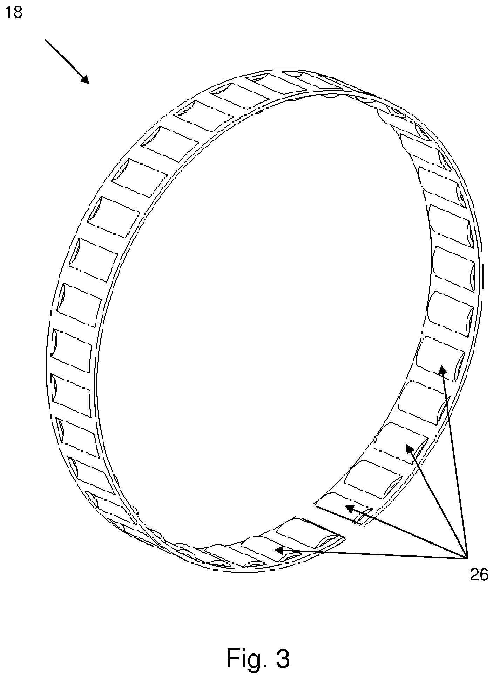

Fig. 1 zeigt eine schematisierte Darstellung eines Ausführungsbeispiels der vorgeschlagenen Verbindungsanordnung 10 zwischen einer antriebseitigen Struktur 14 und einem ein radial innen angeordnetes Getriebe abschließenden Getriebeaußenring 12 im Längsschnitt. Die antriebsseitige Struktur 14 ist vorliegend rohrartig ausgebildet. Zwischen dem Getriebeaußenring 12 und der antriebseitigen Struktur 14 ist ein Ringraum 16 mit einem darin angeordneten Verbindungselement 18 ausgebildet. Der Ringraum 16 ist als umfangsseitig umlaufende Vertiefung in der antriebsseitigen Struktur 14 ausgeführt. Das Verbindungselement 18 weist elastische Eigenschaften auf, ist aus Federstahl gefertigt und als offenes Band mit beabstandeten radial sich erstreckenden Ausbauchungen 26 ausgebildet (vgl. Fig. 3). Unter elastischer Deformation der Ausbauchungen 26 wird eine kraftschlüssige Verbindung zwischen Getriebeaußenring 12 und antriebseitiger Struktur 14 ausbildet. Die Ausbauchungen 26 entlang des Bandes erstrecken sich vorliegend alle radial nach innen, bezogen auf einen montierten Zustand des Bandes 18 in dem Ringraum 16 und einer Zentralachse (nicht dargestellt) der Verbindungsanordnung 10. Die Verbindungsanordnung 10 weist weiterhin axial beidseitig des Ringraumes 16 Umfangsführungen 17 zwischen Getriebeaußenring 12 und antriebseitiger Struktur 14 auf.

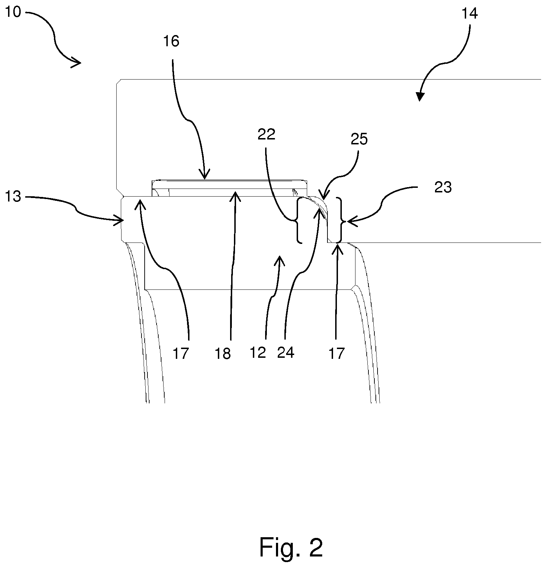

Fig. 2 zeigt eine Detailansicht der Verbindungsanordnung 10 von Fig. 1. auf die verwiesen wird. Zu erkennen ist, dass beiderseits des Ringraums 16 je eine Umfangsführung 17 ausgebildet ist, dass der Ringraum 16 als umfangsseitige Aussparung in der antriebseitigen Struktur 14 ausgebildet ist, und ferner dass zwischen den beiden Umfangsführungen 17 an dem Getriebeaußenring 12 ein Absatz 22 ausgebildet ist, wobei im Bereich des Absatzes 22 ein abgeschrägter Einführungsabschnitt 24 ausgebildet ist. Der Absatz bewirkt somit eine zweistufige Führung. Komplementär dazu ist an der antriebsseitigen Struktur 14 ein Absatz 23 ausgebildet, wobei im Bereich des Absatzes 23 ein abgeschrägter Einführungsabschnitt 25 ausgebildet ist.

Fig. 3 zeigt ein Ausführungsbeispiel eines erfindungsgemäßen Verbindungselements 18. Das Verbindungselement 18 ist als offenes Band aus einem elastischen Material ausgeführt. Entlang der inneren Bandfläche weist das Verbindungselement 18 nach innen gewölbte Ausbauchungen 26 auf.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 10: Verbindungsanordnung
- 12: Getriebeaußenring
- 13: Absatz am Getriebeaußenring
- 14: antriebsseitige Struktur
- 16: Ringraum
- 17: Umfangsführung
- 18: Verbindungselement
- 22: Absatz am Getriebeaußenring
- 23: Absatz an der antriebsseitigen Struktur
- 24: Einführungsabschnitt am Getriebeaußenring
- 25: Einführungsabschnitt an der antriebsseitigen Struktur
- 26: Ausbauchung/en

## Patentansprüche

1. Robotergelenkeinheit mit einer Verbindungsordnung (10) zwischen einer antriebseitigen Struktur (14) und einem ein radial innen angeordnetes Getriebe abschließenden Getriebeaußenring (12), wobei axial mindestens einseitig eines Ringraumes (16) eine Umfangsführung (17) zwischen Getriebeaußenring (12) und antriebseitiger Struktur (14) ausgebildet ist, wobei ein Verbindungselement (18) über der Umfangserstreckung beabstandete elastisch verformbare Ausbauchungen (26) aufweist und unter elastischer Deformation der Ausbauchungen (26) eine kraftschlüssige Verbindung zwischen Getriebeaußenring (12) und antriebseitiger Struktur (14) ausgebildet ist, **dadurch gekennzeichnet, dass** zwischen dem Getriebeaußenring (12) und der antriebseitigen Struktur (14) in der antriebseitigen Struktur (14) axial hinter der Umfangsführung (17) der Ringraum (16) als ein nach radial innen offener, axial beidendig geschlossener Ringraum (16) mit einem darin angeordneten Verbindungselement (18) ausgebildet ist und zwischen den beiden Umfangsführungen (17) an der antriebseitigen Struktur (14) ein Absatz (23) ausgebildet ist.

2. Robotergelenkeinheit mit einer Verbindungsanordnung (10) nach Anspruch 1, **dadurch gekennzeichnet, dass** beiderseits des Ringraums (16) je eine Umfangsführung (17) ausgebildet ist.

3. Robotergelenkeinheit mit einer Verbindungsanordnung (10) nach Anspruch 1, dadurch dass im Bereich des Absatzes (23) an der antriebseitigen Struktur (14) ein abgeschrägter Einführungsabschnitt (24) vorhanden ist.

4. Robotergelenkeinheit mit einer Verbindungsanordnung (10) nach Anspruch 5, **dadurch gekennzeichnet. dass** der Absatz (23) eine mindestens zweistufige Führung des Getriebeaußenrings (12) bewirkt.

5. Robotergelenkeinheit mit einer Verbindungsanordnung (10) nach einem der vorherigen Ansprüche, **dadurch gekennzeichnet, dass** am Getriebeaußenring (12) ein Absatz (13) für eine Zentrierung eines antriebsseitigen Lagerflansches ausgebildet ist.

6. Robotergelenkeinheit mit einer Verbindungsanordnung (10) nach einem der vorherigen Ansprüche, **dadurch gekennzeichnet, dass** das Verbindungselement (18) bandartig mit beabstandeten radial sich erstreckenden Ausbauchungen (26) ausgebildet ist.

7. Roboterarm mit einer Robotergelenkeinheit nach einem der vorherigen Ansprüche.

## Claims

1. Robot joint unit with a connection assembly (10) between a drive-side structure (14) and an outer transmission ring (12) completing an inner radially arranged transmission, wherein, at least on one side of an annular space (16), a circumferential guide (17) is axially formed between the outer transmission ring (12) and drive-side structure (14), wherein a connecting element (18) has spaced-away elastically deformable bulges (26) above the circumferential extension, and a non-positive-locking connection is formed between the transmission outer ring (12) and the drive-side structure (14) under elastic deformation of the bulges (26),
**characterized in that**, between the outer transmission ring (12) and the drive-side structure (14), in the drive-side structure (14) axially behind the circumferential guide (17), the annular space (16) is radially open inwards and axially closed on both sides (16) with a connecting element arranged therein (18) and, between the two circumferential guides (17) on the drive-side structure (14), a recess (23) is formed.

2. Robot joint unit having a connection assembly (10) according to Claim 1, **characterized in that**, on both sides of the annular space (16), a circumferential guide (17) is respectively formed.

3. Robot joint unit comprising a connection assembly (10) according to Claim 1, **characterized in that**, in the area of the section (23) on the drive-side structure (14) a chamfered insertion section (24) is present.

4. Robot joint unit comprising a connection assembly (10) according to Claim 5, **characterized in that** the section (23) causes at least two-stage guidance of the outer transmission ring (12).

5. Robot joint unit comprising a connection assembly (10) according to any one of the preceding claims, **characterized in that** a section (13) is formed on the outer transmission ring (12) for centring a drive-side bearing flange.

6. Robot joint unit comprising a connection assembly (10) according to any one of the preceding claims, **characterized in that** the connecting element (18) is band-like with spaced-away radially extending bulges (26) .

7. Robot arm with a robot joint unit according to one of the preceding claims.

## Revendications

1. Unité articulée de robot avec un ensemble de liaison (10) entre une structure du côté entraînement (14) et une bague extérieure de transmission (12) fermant une transmission disposée radialement à l'intérieur, sachant qu'un guidage périphérique (17) est constitué axialement au moins d'un côté d'un espace annulaire (16) entre la bague extérieure de transmission (12) et la structure du côté entraînement (14), sachant qu'un élément de liaison (18) comporte des bombages (26) élastiquement déformables espacés sur l'extension périphérique et qu'une liaison par conformité de force est constituée par la déformation élastique des bombages (26) entre la bague extérieure de transmission (12) et la structure du côté entraînement (14),
**caractérisée en ce que** l'espace annulaire (16) est constitué entre la bague extérieure de transmission (12) et la structure du côté entraînement (14) dans la structure du côté entraînement (14), axialement derrière le guidage périphérique (17), en tant qu'un espace annulaire (16), ouvert radialement vers l'intérieur, fermé axialement des deux côtés, avec un élément de liaison (18) disposé dedans et qu'un décrochement (23) est constitué entre les deux guidages périphériques (17) sur la structure du côté entraînement (14).

2. Unité articulée de robot avec un ensemble de liaison (10) selon la revendication 1, **caractérisée en ce qu'**un guidage périphérique (17) est respectivement constitué des deux côtés de l'espace annulaire (16).

3. Unité articulée de robot avec un ensemble de liaison (10) selon la revendication 1, **caractérisée en ce qu'**il y a une section d'introduction chanfreinée (24) dans la zone du décrochement (23) sur la structure (14) du côté entraînement.

4. Unité articulée de robot avec un ensemble de liaison (10) selon la revendication 5, **caractérisée en ce que** le décrochement (23) crée un guidage au moins biétagé de la bague extérieure de transmission (12).

5. Unité articulée de robot avec un ensemble de liaison (10) selon l'une quelconque des revendications précédentes, **caractérisée en ce qu'**un décrochement (13) pour un centrage d'une bride de palier côté entraînement est constitué sur la bague extérieure de transmission (12).

6. Unité articulée de robot avec un ensemble de liaison (10) selon l'une quelconque des revendications précédentes, **caractérisée en ce que** l'élément de liaison (18) est constitué en forme de bande avec des bombages (26) distanciés s'étendant radialement.

7. Bras de robot avec une unité articulée de robot selon l'une quelconque des revendications précédentes.
